Europäisches Patentamt

European Patent Office

Office européen des brevets

(11) Veröffentlichungsnummer: **0 249 179**
**A2**

## (12) EUROPÄISCHE PATENTANMELDUNG

(21) Anmeldenummer: **87108240.0**

(22) Anmeldetag: **06.06.87**

(51) Int. Cl.⁴: **C08F 14/06 , C08F 2/20**

(30) Priorität: **11.06.86 DE 3619608**

(43) Veröffentlichungstag der Anmeldung:
**16.12.87 Patentblatt 87/51**

(84) Benannte Vertragsstaaten:
**BE DE FR GB IT NL**

(71) Anmelder: **BASF Aktiengesellschaft**
**Carl-Bosch-Strasse 38**
**D-6700 Ludwigshafen(DE)**

(72) Erfinder: **Wicke, Reinhard,Dr.**
**Anselm-Feuerbach Strasse 25**
**D-6710 Frankenthal(DE)**
Erfinder: **Schulz, Guenther, Dr.**
**Wasgaustrasse 24**
**D-6700 Ludwigshafen(DE)**

(54) **Verfahren zur Herstellung von Vinylchloridpolymerisaten.**

(57) Herstellung von Vinylchloridpolymerisaten durch Polymerisation von Vinylchlorid oder einer Mischung aus Vinylchlorid mit einem oder mehreren anderen Monomeren, die mit Vinylchlorid copolymerisierbar sind, in wäßriger Suspension durch radikalische Polymerisation in Gegenwart von Schutzkolloiden, in dem man als Schutzkolloid einen partiell veresterten Polyvinylalkohol verwendet, der 1 bis 40 mol-% Acetatgruppen und 0,1 bis 12 mol-% Estergruppen einer oder mehrerer ungesättigter aliphatischer Monocarbonsäuren I enthält.

EP 0 249 179 A2

## Verfahren zur Herstellung von Vinylchloridpolymerisaten

Die Erfindung betrifft ein verbessertes Verfahren zur Herstellung von Vinylchloridpolymerisaten durch Polymerisation von Vinylchlorid oder einer Mischung aus Vinylchlorid und einem oder mehreren anderen Monomeren, die mit Vinylchlorid copolymerisierbar sind, in wäßriger Suspension durch radikalische Polymerisation in Gegenwart von Schutzkolloiden, die zur Stabilisierung der Suspension dienen.

Dieses Verfahren ist, sieht man von der erfindungsgemäßen Verbesserung ab, allgemein bekannt, wobei verschiedene wasserlösliche Polymere als Schutzkolloide empfohlen werden. So ist aus der JP-OS 50 052 189 bekannt, zur Herstellung von Vinylchlorid-Polymerisaten als Schutzkolloid Polymere mit freien Hydroxylgruppen, z.B. teilverseifte Polyvinylacetate, zu verwenden, die mit einer phenylsubstituierten, ungesättigten Säure, z.B. Zimtsäure, verestert sind. Weiterhin ist aus der DE-PS 953 119 bekannt, zur Herstellung von Vinylchloridpolymerisaten als Schutzkolloid ein Alkali-oder Ammoniumsalz eines Säureesters eines teilverseiften Polyvinylacetates zu verwenden, in welchem einige der Hydroxylgruppen mit einer in der cis-Form vorliegenden ungesättigten mehrbasischen Säure verestert sind, die 2 Carboxylgruppen an benachbarten C-Atomen gebunden enthält. Weiterhin ist aus der DE-AS 26 10 021 bekannt, zur Herstellung von Vinylchloridpolymerisaten teilverseifte Polyvinylacetate mit einem Verseifungsgrad zwischen 60 und 90 mol-% und einem Polymerisationsgrad von nicht mehr als 2500 zu verwenden, die einen hohen Löslichkeitsindex in Methanol aufweisen und deren wäßrige Lösung besonders scherstabil ist.

Diese Verfahren weisen jedoch verschiedene Nachteile auf: Zum Teil entstehen Polymerisate mit unbefriedigend niedriger Schüttdichte bzw. breiter Korngößenverteilung, zum Teil ist die Wirksamkeit der zur Stabilisierung der Suspension eingesetzten Schutzkolloide gering, so daß große Mengen dieses Hilfsstoffes eingesetzt werden müssen, um ein Polymerisat mit einer zur Weiterverarbeitung geeigneten Teilchengrößenverteilung zu erhalten, was zur Verringerung der Beständigkeit des Polymerisates gegen Wärmeeinwirkung führen kann.

Der Erfindung lag daher die Aufgabe zugrunde, das Verfahren zur radikalischen Suspensionspolymerisation von Vinylchlorid zu verbessern. Insbesondere sollten bei geringer Schutzkolloiddosierung in einer stabilen Suspension Polymerisate hoher Schüttdichte bei enger Korngrößenverteilung herstellbar sein.

Demgemäß wurde ein Verfahren zur Herstellung von Vinylchloridpolymerisaten durch Polymerisation von Vinylchlorid oder einer Mischung aus Vinylchlorid und einem oder mehreren anderen Monomeren, die mit Vinylchlorid copolymerisierbar sind, in wäßriger Suspension durch radikalische Polymerisation in Gegenwart von Schutzkolloiden gefunden, das dadurch gekennzeichnet ist, daß man als Schutzkolloid einen partiell veresterten Poloyvinylalkohol verwendet, der 1 bis 40 mol-% Acetatgruppen und 0,1 bis 12 mol-% Estergruppen einer oder mehrerer ungesättigter aliphatischer Monocarbonsäuren (I) enthält.

Außerdem wurde gefunden, daß die Verwendung eines partiell veresterten Polyvinylalkohols, der 10 bis 30 mol-% Acetatgruppen enthält, zu gutem Erfolg führt. Weiterhin zeigte es sich, daß der partiell veresterte Polyvinylalkohol bevorzugt 1 bis 9 mol-% der Estergruppen der Monocarbonsäuren I enthält, wobei mit besonderem Vorteil als Säuren I Acrylsäure und/oder Methacrylsäure eingesetzt werden.

Wesentlich für die Wirkung der erfindungsgemäßen Schutzkolloide sind die Estergruppierungen mit den ungesättigten aliphatischen Monocarbonsäuren I, deren Anteil zwischen 0,1 und 12, vorzugsweise 1 und 9 mol-% der insgesamt verfügbaren Hydroxyl-und Acetatfunktionen des zugrundeliegenden Polyvinylalkohols beträgt. Ein geringerer Anteil als 0,1 mol-% an I wirkt sich nur unwesentlich aus, und mit höheren Gehalten als 12 mol-% sinkt die Wasserlöslichkeit des Schutzkolloides, wodurch deren Wirksamkeit abnimmt.

Beispiele für die Säuren I sind insbesondere Acrylsäure und Methacrylsäure, aber auch Vinylessigsäure, Allylessigsäure, Crotonsäure, Stilingasäure, ferner Ölsäure, Linol-oder Linolensäure. Diese Säuren können mit aliphatischem $C_1$-$C_{18}$-Resten substituiert sein, solange, was sich allerdings von selbst versteht, die Veresterungsreaktionen durch die Substituenten nicht verhindert werden.

Die erfindungsgemäß als Schutzkolloide verwendeten Polyvinylalkoholderivate sind an sich bekannt, z.B. aus der De-OS 33 22 993, oder nach bekannten Methoden erhältlich, indem man bekannte teilverseifte Polyvinylacetate mit einem Restacetatgehalt von 1 bis 40, vorzugsweise 10 bis 30 mol-%, wie üblich mit einer oder mehreren Säuren I verestert. Diese Reaktion kann in aromatischen Kohlenwasserstoffen wie Toluol als Lösungs-bzw. Dispergiermittel wie in der DE-OS 33 22 993 beschrieben mit Hilfe von Katalysatoren wie 1-Methylimidazol und/oder p-Dimethylaminopyridin durchgeführt werden. Dabei sind vorteilhafterweise Polymerisationsinhibitoren wie 1.6-Di-t-butyl-p-methylphenol in geringen Mengen zugegen.

Der durchschnittliche Polymerisationsgrad des zugrundeliegenden teilverseiften Polyvinylacetates ist unkritisch. Er kann nach bekannten Methoden bestimmt werden; z.B. wird zur Charakterisierung die Typviskosität bestimmt, d.i. die Viskosität einer bei 20°C gemessenen 4 gew.-%igen wäßrigen Lösung des teilverseiften Polyvinylacetates. Die Typviskosität steigt bei konstant gehaltenem Verseifungsgrad des teilverseiften Polyvinylacetates im allgemeinen mit dem durchschnittlichen Polymerisationsgrad an (C.A. Finch, "Polyvinyl Alcohol, Properties and Applications", John Wiley and Sons, London, 1973, Kap. 2). Den Schutzkolloiden des erfindungsgemäßen Verfahrens liegen üblicherweise teilverseifte Polyvinylacetate mit einer Typviskosität zwischen 0,1 und 60 mPaS, im besonderen 0,5 bis 55 mPas, zugrunde.

Man verwendet die Schutzkolloide vorteilhaft in Mengen von 0,01 bis 1 gew.-%, bezogen auf das eingesetzte Monomere.

Die Schutzkolloide sind sowohl für die Suspensionspolymerisation von Vinylchlorid allein als auch für dessen Copolymerisation mit weiteren Monomeren geeignet, wobei deren Anteil bis zu etwa 50 gew.-% des Monomerengemisches betragen kann. Spezielle Beispiele für geeignete Comonomere sind Ethylen, Propylen, Vinylacetat, Vinylpropionat, Laurylvinylether, Isobutylvinylether, Methacrylat, Methylmethacrylat, Ethylacrylat, Propylacrylat, Butylacrylat und Octylacrylat sowie Gemische dieser und weiterer Monomeren.

Die Suspensionspolymerisation des Vinylchlorids und ggf. der weiteren Monomneren kann wie üblich vorgenommen werden, also etwa mit 0,8 bis 2 kg Wasser pro kg der Monomeren bei 20 bis 80°C unter intensiver Durchmischung. Als Initiatoren eignen sich öllösliche Radikalbildner, wie Dilauroylperoxid, tert.-Butylperoxipivalat, Dialkylperoxidicarbonate, Azo-bis-isobutyronitril bzw. deren Gemische, in wirksamer Menge (etwa 0,005 bis 1 gew.-% bezogen auf die Menge der Monomeren).

Neben den erfindungsgemäßen Schutzkolloiden können auch andere Schutzkolloide ohne Nachteil verwendet werden, um die Porosität des Polymerisatkorns zu erhöhen oder die Teilchengröße speziellen Erfordernissen anzupassen. Beispiele sind wasserlösliche Polymere wie Cellulosederivate, wie Methylcellulose, Carboxymethylcellulose und Methylhydroxypropylcellulose sowie ganz oder teilweise verseifte Polyvinylacetate sowie Gemische dieser Schutzkolloide.

Außerdem können noch weitere Hilfsmittel und Zusatzstoffe zugegen sein, beispielsweise Puffersubstanzen wie Natriumbicarbonat, Molekulargewichtsregler wie Trichlorethylen, Vernetzungsmittel wie Diallylterephthalat, Stabilisatoren gegen thermische Schädigung des Polymerisates wie Calciumstearat, Füllstoffe wie Kreide und wasserunlösliche suspendierte Polymerisate wie Polymerisate oder Copolymerisate von Styrol oder Acrylaten, die zur Verbesserung der Schlagzähigkeit des Vinylchloridpolymerisates dienen.

Die erfindungsgemäß verwendeten Schutzkolloide sind hochwirksam. Es lassen sich bei geringer Dosierung in stabiler Suspension Vinylchloridpolymerisate mit hoher Schüttdichte und enger Teilchengrößenverteilung herstellen, was den Gebrauchswert des Polymerisates erheblich erhöht. Die mit dem erfindungsgemäßen Verfahren hergestellten Polymerisate können zur Herstellung von Formteilen, z.B. durch Extrusion, Spritzguß oder Kalandrieren, verwendet werden.


Beispiele

Herstellung der erfindungsgemäßen Schutzkolloide S1 bis S5

Die in Tabelle 1 bezeichneten teilverseiften Polyvinylacetate wurden zusammmen mit Methacrylsäureanhydrid und den angegebenen Zusatzstoffen t Stunden lang bei T°C gerührt. Der entstandene acylierte Polyvinylalkohol wurde abgesaugt und getrocknet, wonach der Gehalt an Methacrylestergruppen nach üblichen Methoden bestimmt wurde. Der jeweils erzielte Gehalt an Methacryloylgruppen ist ebenfalls der Tabelle 1 zu entnehmen.

3

Tabelle 1

| Schutzkolloid | | S1 | S2 | S3 | S4 | S5 |
|---|---|---|---|---|---|---|
| teilverseiftes Polyvinylacetat | Bezeichnung | P1 | P2 | P3 | P3 | P3 |
| | Verseifungsgrad [mol-%] | 73,5 | 72 | 88 | 88 | 88 |
| | Typviskosität [mPaS] | 3,7 | 6 | 43 | 43 | 43 |
| | Menge [g] | 800 | 800 | 1000 | 1000 | 800 |
| Toluol | Menge [g] | 1700 | 1500 | 2000 | 2000 | 1700 |
| 1-Methylimidazol (Veresterungskatalysator) | Menge [g] | 8 | | 30 | 15 | |
| p-Dimethylamino-pyridin (Veresterungskatalysator) | Menge [g] | | | 4 | | 8 |
| 1,6-Di-t-butyl-p-methylphenol (Inhibitor) | Menge [g] | 8 | 8 | 15 | 15 | 8 |
| Methacrylsäure-anhydrid | Menge [g] | 132 | 132 | 248 | 99 | 132 |
| Reaktionstemperatur T [°C] | | 40 | 90 | 70 | 80 | 90 |
| Reaktionszeit | t [h] | 8,5 | 8 | 8,5 | 8 | 8 |
| Gehalt an Methacrylestergruppen im Produkt [mol-%] | | 1,3 | 6,6 | 3,8 | 2,1 | 6,3 |

Herstellung von Vinylchloridsuspensionspolymerisaten

Beispiel 1

In einen Reaktor mit einem Fassungsvermögen von 40 l, ausgestattet mit Rührer und Stromstörern wurde pro kg Monomeres 1,5 kg Wasser, 1 g des Schutzkolloides S1, 1 g Natriumtripolyphosphat und 0,5 g Dicyclohexylperoxidicarbonat eingefüllt. Der Luftsauerstoff im Reaktor wurde durch Spülen mit Stickstoff verdrängt. Es wurden 12 kg Vinylchlorid eingefüllt und unter Rühren mit 300 Umdrehungen pro Minute bei 54°C polymerisiert, bis der Druck im Reaktor um 3 bar abgesunken war. Das restliche Monomere wurde abgetrennt und das Polymerisat durch Filtrieren und Trocknen aufgearbeitet.

Vergleichsbeispiel 1V

Auf die in Beispiel 1 angegebene Weise, jedoch mit dem teilverseiften Polyvinylacetat P1 anstelle des Schutzkolloids S1, wurde ein Vinylchloridpolymerisat hergestellt.

Beispiel 2

Auf die in Beispiel 1 angegebene Weise, jedoch mit dem Schutzkolloid S2 statt S1, wurde ein Vinylchloridpolymerisat hergestellt.

Vergleichsbeispiel 2V

Auf die in Beispiel 1 angegebene Weise, jedoch mit dem teilverseiften Polyvinylacetat P2 statt S1, wurde ein Vinylchloridpolymerisat hergestellt.

Beispiel 3

In einen Reaktor mit einem Fassungsvermögen von 2380 l, ausgestattet mit Rührer und Stromstörern, wurden pro 100 kg Monomeres 150 kg Wasser, 0,1 kg des Schutzkolloides S3, 0,045 kg Natriumtripolyphosphat und 0,05 kg Dicyclohexylperoxidicarbonat eingefüllt. Der Luftsauerstoff im Reaktor wurde durch Spülen mit Stickstoff verdrängt. Es wurden 611 kg Vinylchlorid eingefüllt und unter Rühren mit 130 Umdrehungen pro Minute bei 55°C polymerisiert bis der Druck im Reaktor um 3 bar gefallen war. Aufgearbeitet wurde wie Beispiel 1.

Beispiel 4

Auf die in Beispiel 3 angegebene Weise, jedoch mit dem Schutzkolloid S4 statt S3, wurde ein Vinylchloridpolymerisat hergestellt.

Vergleichsbeispiel 3/4V

Auf die in Beispiel 3 angegebene Weise, jedoch mit dem teilverseiften Polyvinylacetat P3 statt S3, wurde ein Vinylchloridpolymerisat hergestellt.

Beispiel 5

In einen Reaktor mit einem Fassungsvermögen von 1 l, ausgestattet mit Rührer und Stromstörer, wurden pro 100 g Monomeres 163 g Wasser, 0,04 g des Schutzkolloides S5, 0,01 g des Schutzkolloides P3, 0,005 g einer Methylhydroxypropylcellulose mit einem Gehalt an Methoxylgruppen von 26 Gew.-% und an Propylenglykolethergruppen von 3 gew.-% und einer Viskosität von 50 mPas, gemessen an einer 2 gew.-%igen Lösung in Wasser bei 20°C, 0,1 g Natriumtripolyphosphat und 0,12 g Dicyclohexylperoxidicarbonat eingefüllt. Der Luftsauerstoff im Reaktor wurde durch Spulen mit Stickstoff verdrängt. Es wurden 228 g Vinylchlorid eingefüllt und unter Rühren mit 750 Umdrehungen pro Minute bei 52°C polymerisiert bis der Druck im Reaktor um 3 bar gefallen war. Aufgearbeitet wurde wie in Beispiel 1.

Vergleichsbeispiel 5V

Auf die in Beispiel 5 angegebene Weise, jedoch mit einem Schutzkolloid, das aus 55,6 gew.-% des teilverseiften Polyvinylacetates P3 und 44,4 gew.-% Zimtsäure gemäß JP-OS 50 052 183 hergestellt wurde, statt S5, wurde ein Vinylchloridpolymerisat hergestellt.

Die Eigenschaften der Polymerisate sind in Tabelle 2 zusammengefaßt. Die Schüttdichten der Vinylchloridpolymerisate wurde nach DIN 53468 und die Korngrößenverteilungen durch Siebanalyse nach DIN 53734 bestimmt.

Tabelle 2

| Beispiel | Vergleichs-beispiel | Schutz-kolloid | Korngrößenverteilung Kornrückstand [Gewichts-%] bei | | | | | | | Schütt-dichte |
| | | | 250 $\mu$m | 200 $\mu$m | 160 $\mu$m | 125 $\mu$m | 90 $\mu$m | 63 $\mu$m | 40 $\mu$m | [g/cm$^3$] |
|---|---|---|---|---|---|---|---|---|---|---|
| 1 | | S1 | | | 13 | 39 | 90 | 99 | 100 | 0,53 |
| | 1V | P1 | | | 17 | 51 | 85 | 98 | 100 | 0,45 |
| 2 | | S2 | | 16 | 49 | 80 | 97 | 99 | 100 | 0,55 |
| | 2V | P2 | | 51 | 81 | 96 | 99 | 100 | | 0,48 |
| 3 | | S3 | | | 3 | 7 | 31 | 85 | 99 | 0,66 |
| 4 | | S4 | | | 23 | 45 | 64 | 90 | 99 | 0,59 |
| | 3/4V | P3 | | | 36 | 69 | 88 | 96 | 99 | 0,51 |
| 5 | | S5 | 41 | 52 | 76 | | | 100 | | 0,56 |
| | 5V | | 65 | 77 | 94 | | | 99 | | 0,52 |

0 249 179

**Ansprüche**

1. Verfahren zur Herstellung von Vinylchloridpolymerisaten durch Polymerisation von Vinylchlorid oder einer Mischung aus Vinylchlorid mit einem oder mehreren anderen Monomeren, die mit Vinylchlorid copolymerisierbar sind, in wäßriger Suspension durch radikalische Polymerisation in Gegenwart von Schutzkolloiden, dadurch gekennzeichnet, daß man als Schutzkolloid einen partiell veresterten Polyvinylalkohol verwendet, der 1 bis 40 Mol-% Acetatgruppen und 0,1 bis 12 Mol-% Estergruppen einer oder mehrerer ungesättigter aliphatischer Monocarbonsäuren I enthält.

2. Verfahren nach Anspruch 1, dadurch gekennzeichnet, daß der Polyvinylalkohol 10 bis 30 Mol-% Acetatgruppen enthält.

3. Verfahren nach den Ansprüchen 1 und 2, dadurch gekennzeichnet, daß der Polyvinylalkohol 1 bis 9 Mol-% der Estergruppen der Monocarbonsäuren I enthält.

4. Verfahren nach den Ansprüchen 1 bis 3, dadurch gekennzeichnet, daß die Monocarbonsäuren I Acrylsäure und/oder Methacrylsäure sind.